# EUROPÄISCHE PATENTANMELDUNG

(11) **EP 4 265 162 A1**
(43) Veröffentlichungstag der Anmeldung: **25.10.2023**
(21) Anmeldenummer: 22168940.9
(22) Anmeldetag: 20.04.2022
(51) Int. Cl.: A47J 36/38, F24C 15/20, A47J 43/046

(54) **KÜCHENMASCHINE UND DUNSTABZUGSMODUL**

(71) Anmelder: Vorwerk & Co. Interholding GmbH, 42270 Wuppertal (DE)
(72) Erfinder: BRECH, Oliver, 59379 Selm (DE)
(74) Vertreter: Gille Hrabal Partnerschaftsgesellschaft mbB Patentanwälte

(57) **Zusammenfassung**

Die Erfindung betrifft Küchenmaschinen zum Zubereiten einer Speise in einem Speisenzubereitungsgefäß durch Mischen, Zerkleinern und/oder Erhitzen sowie ein Dunstabzugsmodul für eine Küchenmaschine. Eine Küchenmaschine (1) zum Zubereiten einer Speise in einem Speisenzubereitungsgefäß (2) durch Mischen, Zerkleinern und/oder Erhitzen umfasst das Speisenzubereitungsgefäß (2), eine Einsaugöffnung (6), ein Filter (10) sowie eine Saugeinrichtung (11), mit der Dunst (12) aus einer Speisenzubereitung in dem Speisenzubereitungsgefäß (2) durch die Einsaugöffnung (6) eingesaugt und durch das Filter (10) gefördert werden kann. Auf diese Weise wird eine platzsparende und komfortable Möglichkeit zur Absaugung vom entstehendem Dunst geschaffen.

## Beschreibung

Die Erfindung betrifft Küchenmaschinen zum Zubereiten einer Speise in einem Speisenzubereitungsgefäß durch Mischen, Zerkleinern und/oder Erhitzen sowie ein Dunstabzugsmodul für eine Küchenmaschine.

Bei der Zubereitung von Speisen mit einer Küchenmaschine wird häufig Dunst freigesetzt. Dies ist besonders bei Garprozessen der Fall. Dunst bezeichnet Luft, die Dampf, Fett und/oder Gerüche enthält. Derartige Gerüche sind zumindest in Wohnbereichen oft unerwünscht. Enthaltene Feuchtigkeit kann zudem zu unerwünschter Kondensation an z. B. Küchenschränken führen. Demnach besteht Bedarf für ein Filtern des von Küchenmaschinen erzeugten Dunstes.

Eine Lösung besteht darin, eine Küchenmaschine auf einem Herd zu positionieren, um eine über dem Herd fest installierte, herkömmliche Dunstabzugshaube zu nutzen. Allerdings ist ein Herd keine geeignete Stellfläche für eine Küchenmaschine, da bei Restwärme des Herdes oder bei versehentlichem Einschalten einer Herdplatte die Gefahr von Beschädigungen oder Brand droht. Zudem wäre der Herd dann blockiert und damit nicht mehr nutzbar. Auch benötigen herkömmliche Dunstabzugshauben aufgrund des großen Abstands zum Entstehungsort des Dunstes große Absaugleistungen, was mit Geräuschentwicklung und hohem Energiebedarf einhergeht. Vorrichtungen, die Dunst aus einer unteren Position nach unten absaugen, sind aufgrund der Höhe von Küchenmaschinen häufig nicht zusammen mit diesen verwendbar. Derartige Vorrichtungen sind zudem nicht immer vorhanden.

DE 20 2004 015 441 U1 beschreibt eine tragbare Dunstabzugsvorrichtung mit einem Gehäuse. Das Gehäuse hat einen vertikalen Gehäusebereich, in dem eine Ansaugöffnung ausgespart ist. Die Dunstabzugsvorrichtung kann gemeinsam mit einer Küchenmaschine genutzt werden. Allerdings ist auch hier ein zusätzliches Gerät notwendig. Zudem ist der Platzbedarf eines solchen Systems groß, da mehrere Geräte benötigt werden, die nicht notwendigerweise aufeinander abgestimmt sind.

Demnach ist es die Aufgabe der Erfindung, eine weiterentwickelte Möglichkeit zur Verfügung zu stellen, bei der Speisenzubereitung entstehenden Dunst abzusaugen und zu filtern und dabei zumindest einige der oben genannten Nachteile zu beheben. Die Aufgabe wird gelöst durch eine Küchenmaschine zum Zubereiten einer Speise nach Anspruch 1 sowie durch eine weitere Küchenmaschine und ein Dunstabzugsmodul nach den nebengeordneten Ansprüchen. Vorteilhafte Ausgestaltungen sind in den Unteransprüchen angegeben.

Zur Lösung der Aufgabe dient eine Küchenmaschine zum Zubereiten einer Speise in einem Speisenzubereitungsgefäß durch Mischen, Zerkleinern und/oder Erhitzen. Die Küchenmaschine umfasst das Speisenzubereitungsgefäß, eine Einsaugöffnung, ein Filter sowie eine Saugeinrichtung, mit der Dunst aus einer Speisenzubereitung in dem Speisenzubereitungsgefäß durch die Einsaugöffnung eingesaugt und durch das Filter gefördert werden kann.

Mit anderen Worten ist ein Dunstabzug direkt in die Küchenmaschine integriert. Auf diese Weise wird der Dunst platzsparend abgesaugt und gefiltert. Es ist kein zusätzliches Gerät notwendig. Die Absaugung kann optimal auf die Geometrie der Küchenmaschine, des Speisenzubereitungsgefäßes und des Dunstaustrittsbereichs abgestimmt sein. Auf diese Weise können die Geometrie der Einsaugöffnung und die einzusaugenden und zu filternden Volumenströme optimiert sein. Typischerweise ist kein zusätzlicher Stromanschluss notwendig und die Absaugung des Dunstes ist einfach und komfortabel.

Die Küchenmaschine ist insbesondere zum Kochen oder Garen einer Speise in dem Speisenzubereitungsgefäß eingerichtet. Das Speisenzubereitungsgefäß ist insbesondere abnehmbar. Die erfindungsgemäße Küchenmaschine setzt sich typischerweise aus einem Standteil mit einer Einsatzöffnung und dem Speisenzubereitungsgefäß zusammen, welches in die Einsatzöffnung eingesetzt werden kann. Alle Merkmale und Teile, die nicht dem Speisenzubereitungsgefäß zugeordnet sind, sind dementsprechend dem Standteil zugeordnet.

Die Küchenmaschine umfasst eine Einsaugöffnung zum Einsaugen des Dunstes ins Innere des Gehäuses. Die Einsaugöffnung kann im Gehäuse oder an einem separaten Teil angeordnet sein. Die Einsaugöffnung stellt den Anfang eines Strömungskanals dar, durch den der eingesaugte Dunst gefördert wird. Der Strömungskanal kann geradlinig oder gebogen sein. Der Strömungskanal kann Kunststoff und/oder Metall umfassen oder daraus hergestellt sein. Die Einsaugöffnung und/oder eine Auslassöffnung kann durch ein Gitter oder ein Sieb vor einem Hindurchgreifen geschützt sein. Das Gitter oder Sieb kann aus Kunststoff oder Metall bestehen. Eine größte Öffnung oder Maschenweite des Gitters oder Siebs kann kleiner sein als 2 cm, insbesondere kleiner als 1 cm und bevorzugt kleiner als 0,5 cm. Ein Gitter oder Sieb hat insbesondere identische Öffnungen und/oder eine gleichmäßige Anordnung von Öffnungen. Ein derartiges Gitter oder Sieb ist kein Filter im Sinne der Erfindung.

Das Filter dient der Entfernung von Stoffen aus dem Dunst. Ein Filter ist eine Einrichtung, die Bestandteile aus einem Dunststrom zurückhält, wenn der Dunst durch das Filter strömt. Das Filter kann insbesondere Fett, Öl, Gerüche, Dampf und/oder Wassertröpfchen zurückhalten. Das Filter kann eine oder mehrere Filtereinheiten zur Entfernung von Stoffen umfassen. Filtereinheiten können in Strömungsrichtung gesehen hintereinander angeordnet sein. Es kann dann eine erste Filtereinheit von Dunst durchströmt werden, danach eine zweite, usw. Filtereinheiten eines Filters können verschieden sein. Es kann eine Filtereinheit zum Zurückhalten von Fett und/oder Öl vorhanden sein. Ergänzend oder alternativ kann eine Filtereinheit zum Zurückhalten von Gerüchen vorhanden sein. Eine Filtereinheit zum Zurückhalten von Gerüchen kann Aktivkohle enthalten. Ergänzend oder alternativ kann eine Filtereinheit zum Zurückhalten von Dampf und/oder Wassertröpfchen vorhanden sein, beispielsweise ein Kondensatabscheider. Auf diese Weise wird Kondensation von Wasser, beispielsweise an Küchenschränken, verhindert. Insbesondere ist das Filter im Inneren der Küchenmaschine befestigt. Die Befestigung kann an mehreren Punkten des Filters erfolgen. Das Filter kann einen Einsaugbereich zum Einsaugen des Dunstes und einen Auslassbereich für gefilterten Dunst aufweisen. Das Filter kann im Bereich der Einsaugöffnung, im Bereich einer Auslassöffnung oder zwischen diesen Positionen angeordnet sein. Insbesondere ist das Filter in einem unteren und/oder rückwärtigen Bereich der Küchenmaschine angeordnet.

Die Saugeinrichtung kann einen Luftstrom bzw. Dunststrom erzeugen. Auf diese Weise kann entstehender Dunst durch die Einsaugöffnung eingesaugt werden und durch das Filter gefördert werden. Die Saugeinrichtung kann ein Lüfter sein und/oder ein Laufrad umfassen, das durch einen Motor angetrieben wird. Das Laufrad kann ein Rad mit daran befestigten Flügeln sein. Durch Drehen des Laufrads wird der Dunststrom erzeugt. Eine Drehachse des Laufrads verläuft insbesondere in einem Winkel von weniger als 30° zu einem angrenzenden Bereich des Strömungskanals, durch den der eingesaugte Dunst gefördert wird. Der Motor kann ein Elektromotor sein. Die Saugeinrichtung kann eine Regeleinheit umfassen, mit der die Drehzahl des Elektromotors geregelt werden kann. Auf diese Weise kann der eingesaugte Volumenstrom beeinflusst werden. Die Saugeinrichtung kann in Strömungsrichtung vor einem oder mehreren Filtern bzw. Filtereinheiten und/oder hinter einem oder mehreren Filtern bzw. Filtereinheiten angeordnet sein. Die Saugeinrichtung kann den Strom aus eingesaugtem Dunst durch Saugen und/oder durch Drücken fördern.

In einer Ausgestaltung weist die Küchenmaschine eine Heizeinrichtung zum Erhitzen einer Speise in dem Speisenzubereitungsgefäß und/oder ein Werkzeug zum Mischen oder Zerkleinern der Speise in dem Speisenzubereitungsgefäß auf.

Die Heizeinrichtung kann am und/oder im Boden des Speisenzubereitungsgefäßes angeordnet sein. Insbesondere ist eine elektrisches Heizeinrichtung gemeint. Vorzugsweise dient zum Zerkleinern und/oder Mischen ein drehbares Werkzeug, das insbesondere im Bodenbereich des Speisenzubereitungsgefäßes angeordnet oder anordbar ist. Das Werkzeug und die Heizeinrichtung sind elektrisch betreibbar und dienen zum Zubereiten einer Speise in dem Speisenzubereitungsgefäß. Das Werkzeug kann reversibel mit einer Welle der Küchenmaschine verbindbar sein. Bevorzugt ist ein Antrieb zum Drehen des Werkzeugs bzw. der Welle in einem Gehäuse der Küchenmaschine angeordnet. Insbesondere ist der Antrieb mit dem Werkzeug über eine Welle verbunden, die sich in abgedichteter Weise durch eine Öffnung im Boden des Speisenzubereitungsgefäßes erstreckt. Bevorzugt hat das Werkzeug zumindest eine Klinge. Bevorzugt weist das Werkzeug einen oder mehrere radiale Werkzeugarme auf, z. B. Rührarme zum Mischen, Klingen zum Zerkleinern oder Messer bzw. Mixmesser zum Mischen und Zerkleinern. Insbesondere ist der mindestens eine Werkzeugarm fest an einer Halterung des Werkzeugs angebracht.

In einer Ausgestaltung weist die Küchenmaschine ein Gehäuse auf, wobei das Filter und/oder die Einsaugöffnung in dem Gehäuse angeordnet sind, sodass Dunst ins Innere des Gehäuses gesaugt werden kann und dort gefiltert werden kann. Das Gehäuse dient der Aufnahme des Filters und/oder der Saugeinrichtung. Das Filter und/oder die Saugeinrichtung sind insbesondere zumindest teilweise im Gehäuse angeordnet oder anordbar. Die Saugeinrichtung kann davon abweichend auch außen am Gehäuse angeordnet sein. Das Gehäuse ist eine schützende Hülle. Das Gehäuse kann daher aus einem festen Material wie zum Beispiel Metall und/oder Kunststoff bestehen. Im Gehäuse kann sich die Einsaugöffnung befinden. Die Einsaugöffnung stellt den Anfang eines Strömungskanals dar, der zumindest abschnittsweise durch das Gehäuse verläuft.

In einer Ausgestaltung befindet sich eine niedrigste Position der Einsaugöffnung weniger als 5 cm unterhalb einer Dunstaustrittsöffnung des Speisenzubereitungsgefäßes. Bevorzugt befindet sich die niedrigste Position der Einsaugöffnung auf Höhe der Dunstaustrittsöffnung oder höher. Die Dunstaustrittsöffnung kann z. B. eine Öffnung des Speisenzubereitungsgefäßes sein, die sich insbesondere oben befindet, oder eine Öffnung in einem Deckel des Speisenzubereitungsgefäßes. Mit anderen Worten ist die Einsaugöffnung so ausgestaltet und angeordnet, dass zu filternder Dunst im Wesentlichen horizontal und/oder schräg nach oben abgesaugt wird. Auf diese Weise wird die für die Absaugung benötigte Energie verringert. Die Höhe und damit verknüpfte Merkmale werden grundsätzlich in vertikaler Richtung an einem bestimmungsgemäß aufgestellten Speisenzubereitungsgerät gemessen.

In einer Ausgestaltung befindet sich eine höchste Position der Einsaugöffnung weniger als 20 cm, bevorzugt weniger als 10 cm oberhalb einer Dunstaustrittsöffnung des Speisenzubereitungsgefäßes. Mit anderen Worten ist die Einsaugöffnung so ausgestaltet und angeordnet, dass ein Strömungspfad des zu filternden Dunstes zwischen dem Speisenzubereitungsgefäß und der Einsaugöffnung minimiert wird. Auf diese Weise wird eine unnötig hohe Küchenmaschine vermieden. Zudem wird die für die Absaugung benötigte Energie verringert.

In einer Ausgestaltung ist ein Abstand zwischen der Einsaugöffnung und dem Speisenzubereitungsgefäß geringer als 20 cm, insbesondere geringer als 10 cm. Der Abstand meint die kürzeste lichte Weite zwischen dem Speisenzubereitungsgefäß, ggf. mit aufgesetztem Deckel, und der Einsaugöffnung, beispielsweise einem die Einsaugöffnung abdeckendem Gitter. Der Abstand zwischen diesen Punkten ist gering, so dass entstehender Dunst besonders wirksam und effizient abgesaugt werden kann. Zudem ist die erfinderische Lösung besonders platzsparend. Der Abstand ist insbesondere größer als 1 cm.

In einer Ausgestaltung kann die Küchenmaschine auf ein elektronisch gespeichertes Rezept zugreifen und die Saugeinrichtung in Abhängigkeit von dem elektronisch gespeicherten Rezept steuern. Die Küchenmaschine kann so eingerichtet sein, dass sie zumindest teilautomatisiert eine Speise mithilfe des Rezepts zubereiten kann. Die Küchenmaschine kann eine Steuerung aufweisen, die auf ein elektronisches Rezept zugreifen kann und durch einen Rezeptschritt des Rezeptes veranlasst werden kann, das Werkzeug, die Heizeinrichtung und/oder die Saugeinrichtung in einer durch den Rezeptschritt definierten Weise zu betreiben. Das elektronische Rezept kann in der Küchenmaschine oder extern gespeichert sein. Insbesondere ist ein digitales Rezept gemeint.

Das Rezept kann Steuerbefehle für das Werkzeug, die Heizeinrichtung und/oder die Saugeinrichtung umfassen. Die Saugeinrichtung kann so eingestellt werden, dass sie während der Zubereitung einer Speise in der durch das Rezept vorgegebenen Weise betrieben wird. Das Einstellen kann automatisiert oder manuell geschehen. Das Rezept kann mehrere Rezeptschritte enthalten, beispielsweise Zerkleinern von Zutaten und Anbraten der zerkleinerten Zutaten. Das Rezept kann mehrere Steuerbefehle für die Saugeinrichtung umfassen, so dass beispielsweise während des Zerkleinerns keine Absaugung oder eine Absaugung eines lediglich geringen Volumenstroms erfolgt, und während des Anbratens ein großer oder maximaler Volumenstrom abgesaugt wird. Auf diese Weise kann eine optimal auf den jeweiligen Schritt der Speisenzubereitung automatisch abgestimmte Absaugung erfolgen.

Insbesondere umfasst die Küchenmaschine eine Steuerung, die dazu eingerichtet ist, die Saugeinrichtung sowie das Werkzeug und/oder die Heizeinrichtung zu steuern. Insbesondere ist die Steuerung so eingerichtet, dass die Steuerung die Saugeinrichtung basierend auf einer Information bezüglich eines Speisenzubereitungsprozesses steuert. Die Information kann ein Steuerbefehl für das Werkzeug oder die Heizeinrichtung sein oder aus einem solchen abgeleitet sein. Die Information kann aus einem Sensor stammen, beispielsweise einem Temperatursensor in dem Speisenzubereitungsgefäß. So kann beispielsweise bei hohen Temperaturen ein großer Volumenstrom gefördert werden, um dampfhaltigen Dunst gezielt und möglichst vollständig zu filtern.

Eine Steuerung im Sinne der vorliegenden Erfindung umfasst typischerweise eine Datenverarbeitungseinrichtung, mit der Daten elektronisch verarbeitet werden können. Eine Steuerung im Sinne der vorliegenden Erfindung kann einen elektronischen Speicher umfassen, in dem Daten gespeichert werden können. Eine Schnittstelle zur Übertragung von Daten von und/oder zu einem entfernten Gerät kann mit der Steuerung verbunden sein.

In einer Ausgestaltung umfasst die Küchenmaschine eine nach oben weisende Deckfläche und die Einsaugöffnung ist in der Deckfläche angeordnet. Die Deckfläche kann im Wesentlichen horizontal oder schräg ausgerichtet sein. Insbesondere definiert die Deckfläche zumindest einen Bereich einer Oberseite der Küchenmaschine. Eine Deckfläche kann sich circa in Höhe der Oberkante des Speisenzubereitungsgefäßes befinden. Insbesondere fügt sich die Einsaugöffnung und/oder ein die Einsaugöffnung abdeckendes Gitter glatt in die Kontur der Deckfläche ein.

In einer Ausgestaltung weist die Küchenmaschine einen Tragegriff zum Tragen der Küchenmaschine auf. Die Einsaugöffnung ist in dem Tragegriff angeordnet. Dies ist vor allem dann vorteilhaft, wenn der Griff sich in der Nähe eines Dunstaustrittsbereichs der Küchenmaschine befindet. Der Griff kann ein Griff eines Standteils einer Küchenmaschine sein.

Der Tragegriff kann rohrartig ausgebildet sein. Der Strömungskanal kann von der Einsaugöffnung durch den Tragegriff verlaufen. Ein Absaugen kann gemäß dieser Ausgestaltung konstruktiv besonders einfach in eine bestehende Konstruktion integriert werden.

In einer Ausgestaltung weist die Küchenmaschine einen Saugstutzen auf, welcher die Einsaugöffnung bereitstellt. Der Saugstutzen ist insbesondere derart beweglich angeordnet, dass er eine Öffnung an der Oberseite des Speisenzubereitungsgefäßes selektiv freigeben kann. Der Saugstutzen dient dazu, den Dunst noch näher am Ort des Entstehens abzusaugen und beispielsweise zum Gehäuse der Küchenmaschine zu leiten. Die Einsaugöffnung kann so anstelle einer beispielsweise in einem Gehäuse der Küchenmaschine befindlichen Position zum Beispiel näher an einer Öffnung in einem Deckel des Speisenzubereitungsgefäßes positioniert sein oder werden. So kann die Absaugung noch effizienter und geräuschärmer erfolgen.

Ein Saugstutzen ist ein Leitungselement zum Ansaugen von Dunst und kann beispielsweise als Rohr ausgeführt sein. Der Saugstutzen muss nicht notwendigerweise geschlossen sein, sondern kann Öffnungen aufweisen. Der Saugstutzen kann in einer Ausführungsform lösbar an einem Gehäuse der Küchenmaschine befestigt sein. Auf diese Weise kann ein Reinigen besonders einfach erfolgen. Insbesondere ist ein erstes Ende des Saugstutzens an einem Gehäuse der Küchenmaschine befestigt oder befestigbar. Insbesondere befindet sich die Einsaugöffnung an einem dem ersten Ende gegenüberliegenden zweiten Ende des Saugstutzens. Die Einsaugöffnung kann stirnseitig und/oder seitlich angeordnet sein.

In einer Ausgestaltung ist der Saugstutzen um eine Drehachse drehbar gelagert. Insbesondere ist die Drehachse im Wesentlichen vertikal ausgerichtet. Der Saugstutzen kann von einer Saugposition in eine Ruheposition geschwenkt werden und zurück. In der Saugposition befindet sich die Einsaugöffnung über einer Öffnung im Speisenzubereitungsgefäß. In der Ruheposition befindet sich die Einsaugöffnung nicht oder zumindest nicht zentral über der Öffnung. Auf diese Weise kann die Öffnung des Speisenzubereitungsgefäßes oder die Öffnung im Deckel des Speisenzubereitungsgefäßes zumindest teilweise und insbesondere vollständig freigegeben werden, sodass beispielsweise eine Zutat hinzugefügt oder abgeschmeckt werden kann. Auch kann auf diese Weise das Speisenzubereitungsgefäß freigegeben werden, um es, beispielsweise nach Beendigung einer Speisenzubereitung, zu entfernen. Eine Drehung des Saugstutzens kann manuell oder durch einen insbesondere elektrischen Antrieb erfolgen.

In einer Ausgestaltung umfasst die Küchenmaschine einen Deckel für das Speisenzubereitungsgefäß. Der Deckel kann eine Öffnung aufweisen. Die Öffnung ist insbesondere kreisrund. Die Öffnung ist insbesondere mittig. Der Deckel dient dem Verschließen der Öffnung des Speisenzubereitungsgefäßes derart, dass ein Hineingreifen nicht möglich ist. Der Deckel kann auf dem Speisenzubereitungsgefäß verriegelt werden. Eine Steuerung der Küchenmaschine kann so eingerichtet sein, dass ein Betreiben des Werkzeugs und/oder der Heizeinrichtung nur möglich ist, wenn der Deckel auf dem Speisenzubereitungsgefäß verriegelt ist. Die Öffnung ermöglicht ein Zufügen von Zutaten während der Speisenzubereitung. Insbesondere bei Garprozessen kann Dunst dann durch die Öffnung entweichen.

In einer Ausgestaltung kann das Filter gereinigt werden. Es kann zumindest eine Filtereinheit des Filters gereinigt werden. Auf diese Weise kann beispielsweise eine verminderte Filterleistung wiederhergestellt werden. Beispielsweise ist ein Spülen des Filters möglich, insbesondere ein Rückspülen, um auf diese Weise Verschmutzungen vom Filter zu entfernen. Es kann beispielsweise mit Luft oder Wasser bzw. einer Reinigungslösung gespült werden. Das Reinigen des Filters kann im Inneren der Küchenmaschine erfolgen. In einer Ausführungsform ist das Filter von außen zugänglich, um eine Entnahme des Filters zum Reinigen zu ermöglichen.

In einer Ausführungsform kann das Filter und/oder eine Filtereinheit entnommen werden, um es durch ein neuwertiges Filter bzw. eine neuwertige Filtereinheit zu ersetzen. Dies kann insbesondere der Fall sein, wenn das Filter bzw. die Filtereinheit ein Adsorptionsmittel, wie z. B. Aktivkohle, zur Entfernung von Gerüchen enthält. Durch den Austausch kann dann frisches Adsorptionsmittel bereitgestellt werden und die Filterkapazität wiederhergestellt werden. Ein Ersetzen eines Filters bzw. einer Filtereinheit kann aber auch bei rein mechanisch wirkenden Filtern sinnvoll sein.

In einer Ausgestaltung weist die Küchenmaschine eine Auslassöffnung für gefilterten Dunst auf. Der gefilterte Dunst kann durch die Auslassöffnung wieder abgegeben werden, z. B. das Gehäuse verlassen. Die Auslassöffnung kann so ausgestaltet sein, dass das Auslassen des Dunstes gerichtet erfolgt.

Insbesondere ist die Auslassöffnung an einer Rückseite, also einer rückwärtigen Fläche, des Speisenzubereitungsgefäßes angeordnet. Auf diese Weise wird ein möglicherweise ungewünschtes Ausströmen in Richtung des Benutzers vermieden. Die Auslassöffnung kann auch an einer Seitenfläche des Gehäuses angeordnet sein.

In einer Ausführungsform weist die Küchenmaschine einen Elektromotor zum Antreiben des Werkzeugs auf, der auch zum Antreiben der Saugeinrichtung eingerichtet ist. Der Elektromotor ist somit für beide Funktionen eingerichtet. Insbesondere können die Saugeinrichtung und das Werkzeug unabhängig voneinander genutzt werden. Ein entsprechend konfiguriertes Getriebe kann vorgesehen sein. Die Stromversorgung des Elektromotors und die Stromversorgung des Motors der Saugeinrichtung und insbesondere auch die Stromversorgung der Heizeinrichtung können derart gekoppelt sein, dass ein einziger Stecker für beide Funktionen ausreicht.

In einer Ausführungsform weist die Küchenmaschine als Filter oder als eine Filtereinheit des Filters eine Einrichtung zur Abscheidung von Wasser aus dem Dunst auf. Insbesondere weist die Küchenmaschine einen Sammeltank zum Auffangen des abgeschiedenen Wassers auf. Alternativ kann ein Ablauf vorhanden sein, durch den abgeschiedenes Wasser abfließen kann. Insbesondere umfasst die Einrichtung zur Abscheidung von Wasser ein Kühlelement zur Kühlung des Dunstes zwecks Kondensation des Wassers. Das Kühlelement dient der Kühlung einer mit dem Dunst in Kontakt stehenden Oberfläche. An der Oberfläche kann somit Wasser kondensieren. Insbesondere wird als Kühlelement ein aktives Kühlelement wie beispielsweise ein Peltier-Element verwendet. Insbesondere kann die Küchenmaschine so ausgestaltet sein, dass das kondensierte Wasser schwerkraftbedingt in den Sammeltank fließt. Zu diesem Zweck ist zwischen der gekühlten Oberfläche und dem Tank ein geeignet ausgerichteter Kanal zum Ableiten des Wasserdampfs angeordnet. Der Kanal kann Teil eines Strömungskanals für Dunst durch die Küchenmaschine sein. Somit kann Dunst im Strömungskanal durch das Kühlelement gekühlt werden, sodass enthaltenes Wasser kondensiert. Die Filtervorrichtung ist bevorzugt stromabwärts der kühlbaren Oberfläche angeordnet. Die Lebensdauer kann so erhöht werden. Alternativ kann die Filtervorrichtung auch stromabwärts der kühlbaren Oberfläche angeordnet sein. Der Sammeltank ist insbesondere herausnehmbar, sodass er auf einfache Weise ausgeleert werden kann. Diese Ausgestaltung ermöglicht eine Ausgabe von Abluft mit geringem Wasseranteil. Dies ist vorteilhaft für Möbel wie beispielsweise Küchenschränke, bei denen Feuchtigkeit Schäden verursachen kann.

Ein weiterer Aspekt der Erfindung ist eine Küchenmaschine zum Zubereiten einer Speise in einem Speisenzubereitungsgefäß durch Mischen, Zerkleinern und/oder Erhitzen. Die Küchenmaschine umfasst das Speisenzubereitungsgefäß sowie eine Heizeinrichtung zum Erhitzen einer Speise in dem Speisenzubereitungsgefäß und/oder ein Werkzeug zum Mischen oder Zerkleinern der Speise in dem Speisenzubereitungsgefäß. Die Küchenmaschine weist ferner einen Aufnahmebereich auf, der dazu eingerichtet ist, ein Dunstabzugsmodul aufzunehmen. Das aufzunehmende Dunstabzugsmodul weist ein Filter sowie eine Saugeinrichtung auf, mit der Dunst aus einer Speisenzubereitung in dem Speisenzubereitungsgefäß durch das Filter gesaugt werden kann. Dieser Aspekt stellt eine modulare Küchenmaschine zur Verfügung, welches bei Bedarf mit einem separat verfügbaren Dunstabzugsmodul ausgestattet werden kann. Alle Merkmale, Ausführungsformen und Wirkungen der eingangs beschriebenen Küchenmaschine gelten auch für diese Küchenmaschine und umgekehrt.

Der Aufnahmebereich ist ein Ort, an dem ein Dunstabzugsmodul angeordnet werden kann, um dort betrieben zu werden. Typischerweise befindet sich der Aufnahmebereich im Inneren der Küchenmaschine. Der Aufnahmebereich kann ein Hohlraum sein. Insbesondere umfasst die Küchenmaschine ein Gehäuse und der Aufnahmebereich ist im Gehäuse angeordnet. Die Küchenmaschine kann eine Abgabeöffnung aufweisen, durch welche ein zu filternder Dunststrom abgegeben wird, um in einen Einströmbereich des Dunstabzugsmoduls einzuströmen. Alternativ kann der Dunststrom unmittelbar in das Dunstabzugsmodul eingesaugt werden. Die Küchenmaschine kann eine Empfangsöffnung aufweisen, durch welche ein gefilterter Dunststrom aus einem Auslassbereich des Dunstabzugsmoduls in die Küchenmaschine einströmen kann. Alternativ kann der gefilterte Dunststrom unmittelbar aus dem Dunstabzugsmodul in die Umgebung ausströmen.

Die Küchenmaschine kann eine Einsaugöffnung und/oder eine Auslassöffnung aufweisen, durch die bei im Aufnahmebereich platziertem Dunstabzugsmodul Dunst eingesaugt bzw. ausgelassen werden kann. Die Einsaugöffnung und/oder die Auslassöffnung kann durch ein Verkleidungselement verkleidet sein, um Zugänge durch das Gehäuse zu verschließen, wenn das Dunstabzugsmodul nicht im Aufnahmebereich platziert ist. Alternativ können die Einsaugöffnung und/oder die Auslassöffnung erst im Zuge des Einbaus des Dunstabzugsmoduls hergestellt werden.

Ein weiterer Aspekt der Erfindung ist ein Dunstabzugsmodul für eine Küchenmaschine. Das Dunstabzugsmodul umfasst einen Einströmbereich, ein Filter, eine Saugeinrichtung und einen Auslassbereich. Mittels der Saugeinrichtung kann Dunst aus einer Speisenzubereitung durch den Einströmbereich eingesaugt sowie durch das Filter und den Auslassbereich gefördert werden. Das Dunstabzugsmodul ist dazu eingerichtet, in einem Aufnahmebereich einer Küchenmaschine aufgenommen zu werden.

Der Einströmbereich dient dem Einströmen des zu filternden Dunstes in das Dunstabzugsmodul. Der Auslassbereich dient dem Auslassen des gefilterten Dunstes aus dem Dunstabzugsmodul. Der Einströmbereich kann die Einlassöffnung bereitstellen, wenn das Dunstabzugsmodul im Aufnahmebereich platziert ist. Der Auslassbereich kann die Auslassöffnung bereitstellen, wenn das Dunstabzugsmodul im Aufnahmebereich platziert ist. Die Einlassöffnung und/oder die Auslassöffnung können alternativ durch die Küchenmaschine bereitgestellt werden. Wenn das Dunstabzugsmodul im Aufnahmebereich platziert ist, ist die Küchenmaschine insbesondere analog zum oben genannten ersten Aspekt der Erfindung ausgestaltet. Alle Merkmale, Ausführungsformen und Wirkungen der eingangs beschriebenen Küchenmaschinen gelten demnach auch für das Dunstabzugsmodul und umgekehrt.

Insbesondere umfasst das Dunstabzugsmodul ein Gehäuse, welches in einem dafür vorgesehenen Aufnahmebereich einer Speisenzubereitungsvorrichtung positioniert und ggf. befestigt werden kann. Dies kann durch einen Endkunden erfolgen. Beispielsweise hat die Küchenmaschine eine Abdeckung, die den Aufnahmebereich verschließt, wenn das Dunstabzugsmodul nicht im Aufnahmebereich platziert ist. Diese kann entfernt oder in eine andere Position bewegt werden, um das Dunstabzugsmodul zu platzieren. Anschließend kann die Abdeckung wieder in Position zum Abdecken gebracht werden.

Das Dunstabzugsmodul kann einteilig oder mehrteilig aufgebaut sein. Im Falle eines einteiligen Aufbaus sind insbesondere alle Komponenten des Dunstabzugsmoduls in einem Gehäuse des Dunstabzugsmodul angeordnet. Im Falle eines mehrteiligen Aufbaus können mehrere Gehäuse vorhanden sein, wobei beispielsweise das Filter in einem ersten Gehäuse angeordnet ist und die Saugeinrichtung in einem zweiten Gehäuse angeordnet ist.

Ein weiterer Aspekt der Erfindung ist ein Verfahren zum Zubereiten einer Speise mit einer Küchenmaschine. Die Küchenmaschine umfasst ein Speisenzubereitungsgefäß, eine Einsaugöffnung, ein Filter sowie eine Saugeinrichtung und/oder ist eine erfindungsgemäße Küchenmaschine. Es wird in dem Speisenzubereitungsgefäß eine Speise zubereitet, insbesondere durch Mischen, Zerkleinern und/oder Erhitzen. Gleichzeitig wird bei der Speisenzubereitung entstehender Dunst mit der Saugeinrichtung durch die Einsaugöffnung eingesaugt und durch das Filter gefördert, um auf diese Weise gefiltert zu werden. Alle Merkmale, Ausführungsformen und Wirkungen der eingangs beschriebenen Küchenmaschinen gelten auch für das Verfahren und umgekehrt.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: eine Ausgestaltung einer erfindungsgemäßen Küchenmaschine,
- Figur 2:: eine weitere Ausgestaltung einer erfindungsgemäßen Küchenmaschine,
- Figur 3:: ein Standteil einer erfindungsgemäßen Küchenmaschine, sowie
- Figur 4:: eine weitere Ausgestaltung einer erfindungsgemäßen Küchenmaschine.

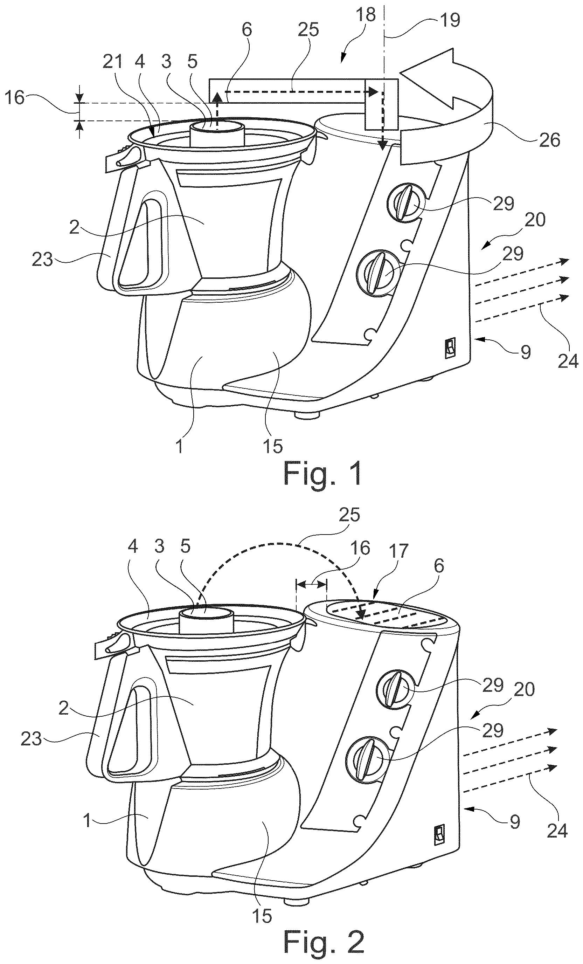

Figur 1 zeigt eine erfindungsgemäße Küchenmaschine 1 mit einem Standteil, in dem ein Speisenzubereitungsgefäß 2 eingesetzt ist. Die Küchenmaschine 1 weist mehrere Bedienelemente in Form von Drehschaltern 29 auf, über die ein im Inneren des Speisenzubereitungsgefäßes 2 befindliches Werkzeug und/oder ein im Boden des Speisenzubereitungsgefäßes 2 befindliches Heizelement gesteuert werden können. Ferner weist die Küchenmaschine 1 im Inneren ihres Gehäuses 15 ein Filter und eine Saugeinrichtung auf, mit der Dunst aus einer Speisenzubereitung im Speisenzubereitungsgefäß 2 eingesaugt und durch das Filter gefördert werden kann. An der Rückseite 20 des Gehäuses befindet sich eine Auslassöffnung 9, durch die der gefilterte Dunst 24 aus der Küchenmaschine 1 herausströmen kann.

Das Speisenzubereitungsgefäß 2 ist ein nach oben hin offener Topf mit einem Griff 23. Die obere Öffnung 21 kann zu einem großen Teil von einem Deckel 4 verschlossen sein. Lediglich in der Mitte des Deckels 4 kann eine kreisrunde Öffnung 5 mit einem Durchmesser zwischen 3 cm und 8 cm vorhanden sein, durch die auch während der Speisenzubereitung Zutaten hinzugefügt werden können. Bei der Speisenzubereitung entstehender Dunst gelangt folglich durch die Öffnung 5 im Deckel 4 nach außen, falls die obere Öffnung durch den Deckel 4 verschlossen worden ist. Die Öffnung 5 ist in dieser Ausführungsform die Dunstaustrittsöffnung 3. Ist kein Deckel 4 vorhanden, so ist die obere Öffnung 21 die Dunstaustrittsöffnung.

Die Küchenmaschine 1 umfasst ferner einen schematisch dargestellten Saugstutzen 18, der in seinem ersten Ende schwenkbar an einer Deckfläche 17 des Gehäuses 15 der Küchenmaschine 1 befestigt ist. Das freie zweite Ende des Saugstutzens 18 weist an seinem Umfang und/oder stirnseitig die Einsaugöffnung 6 auf, durch welche der entstehende Dunst angesaugt werden kann. Die resultierende Strömung ist mit dem Bezugszeichen 25 dargestellt. Der Saugstutzen 18 verlagert die Einsaugöffnung 6 in die unmittelbare Nähe der Dunstaustrittsöffnung 3. Der Abstand 16 zwischen der Einsaugöffnung 6 und der Dunstaustrittsöffnung 3 kann in dieser und anderen Ausführungsformen zwischen 3 cm und 8 cm betragen.

Der Saugstutzen 18 ist um die Drehachse 19 schwenkbar gelagert. Auf diese Weise kann er aus der gezeigten Saugposition heraus seitlich in eine Ruheposition verschwenkt werden, um auf diese Weise die Öffnung 5 im Deckel 4 und/oder die Öffnung 21 des Speisenzubereitungsgefäßes 2 freizugeben. In der Ruheposition kann insbesondere auch das Speisenzubereitungsgefäß 2 mithilfe des Griffs 23 aus dem Standteil entfernt werden. Ein Pfeil 26 stellt die Schwenkbewegung dar.

Eine andere Ausführungsform einer erfindungsgemäßen Küchenmaschine 1 ist in Figur 2 gezeigt. Um Dopplungen zu vermeiden wird lediglich auf die Unterschiede zur Figur 1 eingegangen und ansonsten auf oben verwiesen. Bei der hier gezeigten Küchenmaschine 1 befindet sich an der Deckfläche 17 kein Saugstutzen, sondern die Einsaugöffnung 6. Auf diese Weise wird der entstehende Dunst von der Dunstaustrittsöffnung 3 direkt ins Innere des Gehäuses 15 gesaugt und zwar beispielsweise entlang der Strömung 25.

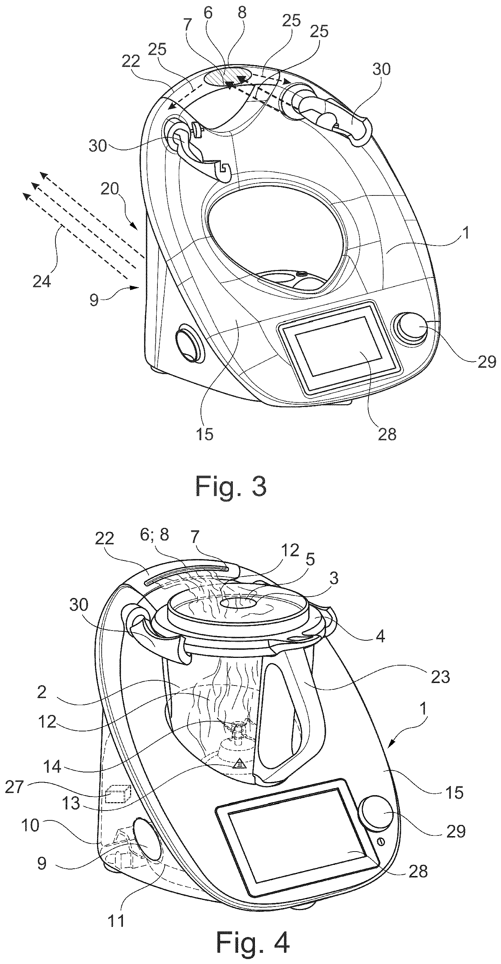

Figur 3 zeigt einen Teil einer weiteren Ausführungsform einer erfindungsgemäßen Küchenmaschine 1. Dargestellt ist lediglich das Standteil einer Küchenmaschine 1 ohne ein eingesetztes Speisenzubereitungsgefäß 2. Die Küchenmaschine 1 weist einen Tragegriff 22 auf, mit dem das Standteil angehoben werden kann. Der Tragegriff 22 befindet sich an der Oberseite des Standteils und ungefähr auf Höhe einer Oberkante des Speisenzubereitungsgefäßes. Im Tragegriff 22 befindet sich die beispielsweise ellipsenförmige Einsaugöffnung 6. Auf diese Weise kann die Absaugung des Dunstes mittels vorhandener Teile und lediglich über kurze Distanzen erfolgen, was eine besonders wirksame und effiziente Absaugung ermöglicht. Es stellt sich beispielsweise die mit dem Bezugszeichen 25 gekennzeichnete Strömung ein. Diese verläuft nach dem Eintritt in den Tragegriff 22 auf einer oder beiden Seiten im Inneren des Tragegriffs 22 in den weiter unten liegenden Teil des Gehäuses 15 der Küchenmaschine 1, in dem sich das Filter sowie die Saugeinrichtung befinden. Eine Auslassöffnung 9 befindet sich an der Rückseite 20 der Küchenmaschine 1. Durch diese wird der gefilterte Dunst 24 in Form eines gerichteten Strahls abgegeben.

Die hier dargestellte Küchenmaschine 1 umfasst ferner ein Display 28, einen Drehschalter 29 sowie Arme 30, auf die unten im Bezug zu Figur 4 eingegangen wird. Die Figur 4 zeigt eine Küchenmaschine 1 mit einem Speisenzubereitungsgefäß 2. Auf dem Speisenzubereitungsgefäß 2 ist ein Deckel 4 aufgesetzt. Der Deckel 4 für das Speisenzubereitungsgefäß 2 ist durch Arme 30 verriegelt. Der Deckel 4 befindet sich zwischen den beiden Armen 30. Die Arme 30 können um ihre Längsachse durch einen Motor der Küchenmaschine zwischen einer Öffnungsstellung und einer Verriegelungsstellung hin und her gedreht werden. Der Deckel 4 hat einen Sensor und zwar einen Kipphebel eines elektrischen Schalters heruntergedrückt und so ausgelöst. Die Arme 30 und der Kipphebel sind am Standteil der Küchenmaschine 1 angebracht. Das Speisenzubereitungsgefäß 2 ist in das Standteil eingesetzt und kann aus dem Standteil herausgenommen werden. Um das Speisenzubereitungsgefäß 2 herausnehmen zu können, umfasst es einen Griff 23.

Im Speisenzubereitungsgefäß 2 befindet sich ein drehbares Werkzeug 14, das mit einem Motor angetrieben werden kann. Der Motor befindet sich im Standteil 12. Im Grund des Speisenzubereitungsgefäßes 2 ist eine Heizeinrichtung 13 vorhanden, die mit dem Standteil 12 für ein Erhitzen stromleitend verbunden werden kann. Im Standteil ist außerdem der Motor für das Drehen der Arme 10 angeordnet.

Die Küchenmaschine, insbesondere das Standteil, umfasst zur Bedienung ein berührungsempfindliches Display 28 und einen Drehschalter 29. Der Drehschalter 29 kann gedreht und gedrückt werden. Display 28 und Drehschalter 29 sind also Bedienelemente der Küchenmaschine 1. Über die Bedienelemente 28 und 29 können Daten eingegeben werden. Der Deckel 4 umfasst mittig eine Öffnung 5, die mit einem nicht gezeigten, zum Beispiel gefäßartigen Verschluss verschlossen werden kann.

Im Standteil befindet sich eine Steuerung 27, mit der das Werkzeug 14, die Heizeinrichtung 13 und die Saugeinrichtung 11 gesteuert werden können. Im Standteil 12 befindet sich insbesondere eine Funkeinheit, über die Daten drahtlos gesendet und empfangen werden können. Die Funkeinheit kann beispielsweise per Bluetooth und/oder WiFi Daten senden sowie empfangen. Über die Funkeinheit kann die Steuerung 27 beispielsweise auf ein extern elektronisch gespeichertes Rezept zugreifen. Die Steuerung 27 kann mithilfe des Rezepts die Zubereitung einer Speise steuern. Die Steuerung 27 kann von der der Saugeinrichtung 11 Daten empfangen und insbesondere mit dieser Daten austauschen. Alternativ oder ergänzend können Rezepte aber auch in einer Speichereinheit der Küchenmaschine gespeichert sein. Die Steuerung 27 kann den Betrieb der Saugeinrichtung steuern.

Die Küchenmaschine 1 enthält im Inneren des Gehäuses 15 ein Filter 10. Das Filter 10 oder eine Filtereinheit des Filters 10 kann austauschbar und von außen zugänglich ausgestaltet sein, sodass es beispielsweise bei oder vor einem Rückgang der Filterkapazität gereinigt oder ausgewechselt werden kann. Das Filter 10 oder eine Filtereinheit des Filters 10 kann so ausgestaltet sein, dass es gereinigt werden kann.

Beim Zubereiten von Speisen entstehender Dunst 12 befindet sich zunächst im Speisenzubereitungsgefäß 2. Dieser entweicht durch die Öffnung 21 des Speisenzubereitungsgefäßes und insbesondere durch die Öffnung 5 des Deckels 4, die im vorliegenden Ausführungsbeispiel die Dunstaustrittsöffnung 3 darstellt, nach oben. Die Einsaugöffnung 6 befindet sich in der hier gezeigten Ausführungsform im Tragegriff 22. Durch diese wird der entweichende Dunst 12 eingesaugt. Die Absaugöffnung 6 ist in der hier gezeigten Variante schlitzförmig ausgebildet und folgt der gebogenen Kontur des Tragegriffs 22. Der Abstand zwischen der Einsaugöffnung 6 und dem Speisenzubereitungsgefäß 2 ist geringer als 10 cm. Eine niedrigste Position 7 der Einsaugöffnung 6 befindet sich weniger als 5 cm oberhalb der Dunstaustrittsöffnung 3. Eine höchste Position der Einsaugöffnung 6 befindet sich weniger als 10 cm oberhalb der Dunstaustrittsöffnung 3. Auf diese Weise sind lediglich kurze Wege notwendig, um den Dunst 12 einzusaugen.

Ein Gitter schützt die Absaugöffnung 6 und bildet einen Teil der äußeren Kontur des Tragegriffs 22 aus, sodass ein Tragen der Küchenmaschine 1 trotz vorhandener Absauföffnung 6 uneingeschränkt möglich ist. Der eingesaugte Dunst 12 wird mittels der Saugeinrichtung 11 durch einen Strömungskanal im Inneren des Tragegriffs sowie des Gehäuses der Küchenmaschine 1 zum Filter 10 und durch dieses hindurch gefördert. Die Saugeinrichtung 11 umfasst zu diesem Zweck ein Gebläse, welches von einem Elektromotor angetrieben wird. Dieser kann der Elektromotor zum Antreiben des Werkzeugs 14 oder ein separater Elektromotor sein.

Der so geförderte Dunst 12 strömt durch den Filter 10, wird durch wenigstens eine Filtereinheit des Filters 10, beispielsweise durch einen in einer Filtereinheit befindliches Filtermaterial gefiltert und strömt durch die Auslassöffnung 9 wieder aus der Filtervorrichtung heraus. Die Auslassöffnung 9 befindet sich in einer rückwärtigen Seitenwand der Küchenmaschine 1. Die Küchenmaschine 1 kann als eine Filtereinheit des Filters 10 eine Einrichtung zur Abscheidung von Wasser umfassen, welches ein Kühlelement zur Kühlung des Dunsts zwecks Kondensation des enthaltenen Wassers umfassen kann.

## Patentansprüche

1. Küchenmaschine (1) zum Zubereiten einer Speise in einem Speisenzubereitungsgefäß (2) durch Erhitzen sowie Mischen und/oder Zerkleinern, umfassend das Speisenzubereitungsgefäß (2), eine Einsaugöffnung (6), ein Filter (10) sowie eine Saugeinrichtung (11), mit der Dunst (12) aus einer Speisenzubereitung in dem Speisenzubereitungsgefäß (2) durch die Einsaugöffnung (6) eingesaugt und durch das Filter (10) gefördert werden kann.

2. Küchenmaschine (1) nach Anspruch 1, **dadurch gekennzeichnet, dass** die Küchenmaschine (1) eine Heizeinrichtung (13) zum Erhitzen einer Speise in dem Speisenzubereitungsgefäß (2) und ein Werkzeug (14) zum Mischen oder Zerkleinern der Speise in dem Speisenzubereitungsgefäß (2) aufweist.

3. Küchenmaschine (1) nach einem der vorhergehenden Ansprüche, **dadurch gekennzeichnet, dass** die Küchenmaschine (1) ein Gehäuse (15) aufweist, wobei das Filter (10) und insbesondere auch die Einsaugöffnung (6) in dem Gehäuse (15) angeordnet sind, sodass Dunst (12) ins Innere des Gehäuses (15) gesaugt werden kann und dort gefiltert werden kann.

4. Küchenmaschine (1) nach einem der vorhergehenden Ansprüche, **dadurch gekennzeichnet, dass** sich eine niedrigste Position (7) der Einsaugöffnung (6) weniger als 5 cm unterhalb einer Dunstaustrittsöffnung (3) des Speisenzubereitungsgefäßes (2) befindet, bevorzugt auf Höhe der Dunstaustrittsöffnung (3) oder höher, und/oder
dass sich eine höchste Position (8) der Einsaugöffnung (6) weniger als 20 cm, bevorzugt weniger als 10 cm oberhalb einer Dunstaustrittsöffnung (3) des Speisenzubereitungsgefäßes (2) befindet.

5. Küchenmaschine (1) nach einem der vorhergehenden Ansprüche, **dadurch gekennzeichnet, dass** ein Abstand (16) zwischen der Einsaugöffnung (6) und dem Speisenzubereitungsgefäß (2) geringer ist als 20 cm, insbesondere geringer als 10 cm.

6. Küchenmaschine (1) nach einem der vorhergehenden Ansprüche, **dadurch gekennzeichnet, dass** die Küchenmaschine (1) auf ein elektronisch gespeichertes Rezept zugreifen kann und dass die Küchenmaschine (1) die Saugeinrichtung (11) in Abhängigkeit von dem elektronisch gespeicherten Rezept steuert.

7. Küchenmaschine (1) nach einem der vorhergehenden Ansprüche, **dadurch gekennzeichnet, dass** die Küchenmaschine (1) eine nach oben weisende Deckfläche (17) aufweist und die Einsaugöffnung (6) in der Deckfläche (17) angeordnet ist.

8. Küchenmaschine (1) nach einem der vorhergehenden Ansprüche, **dadurch gekennzeichnet, dass** die Küchenmaschine (1) einen Tragegriff (22) zum Tragen der Küchenmaschine (1) aufweist und die Einsaugöffnung (6) in dem Tragegriff (22) angeordnet ist.

9. Küchenmaschine (1) nach einem der vorhergehenden Ansprüche, **dadurch gekennzeichnet, dass** die Küchenmaschine (1) einen Saugstutzen (18) aufweist, welcher die Einsaugöffnung (6) bereitstellt, wobei der Saugstutzen (18) beweglich ist, so dass er eine Öffnung (21) an der Oberseite des Speisenzubereitungsgefäßes (2) freigeben kann.

10. Küchenmaschine (1) nach dem vorhergehenden Anspruch, **dadurch gekennzeichnet, dass** der Saugstutzen (18) um eine insbesondere im Wesentlichen vertikale Drehachse (19) drehbar gelagert ist.

11. Küchenmaschine (1) nach einem der vorhergehenden Ansprüche, **dadurch gekennzeichnet, dass** die Küchenmaschine (1) einen Deckel (4) für das Speisenzubereitungsgefäß (2) umfasst, wobei der Deckel (4) eine Öffnung (5) aufweist.

12. Küchenmaschine (1) nach einem der vorhergehenden Ansprüche, **dadurch gekennzeichnet, dass** das Filter (10) gereinigt werden kann.

13. Küchenmaschine (1) nach einem der vorhergehenden Ansprüche, **dadurch gekennzeichnet, dass** die Küchenmaschine (1) eine Auslassöffnung (9) für gefilterten Dunst (12) aufweist, wobei die Auslassöffnung (9) an einer Rückseite (20) des Speisenzubereitungsgefäßes (2) angeordnet ist.

14. Küchenmaschine (1) zum Zubereiten einer Speise in einem Speisenzubereitungsgefäß (2) durch Mischen, Zerkleinern und/oder Erhitzen, umfassend das Speisenzubereitungsgefäß (2) sowie eine Heizeinrichtung (13) zum Erhitzen einer Speise in dem Speisenzubereitungsgefäß (2) und/oder ein Werkzeug (14) zum Mischen oder Zerkleinern der Speise in dem Speisenzubereitungsgefäß (2), wobei die Küchenmaschine (1) ferner einen Aufnahmebereich aufweist, der dazu eingerichtet ist, ein Dunstabzugsmodul aufzunehmen, wobei das Dunstabzugsmodul ein Filter (10) sowie eine Saugeinrichtung (11) aufweist, mit der Dunst (12) aus einer Speisenzubereitung in dem Speisenzubereitungsgefäß (2) durch das Filter (10) gesaugt werden kann.

15. Dunstabzugsmodul für eine Küchenmaschine (1), umfassend einen Einströmbereich, ein Filter (10), eine Saugeinrichtung (11) und einen Auslassbereich, wobei mittels der Saugeinrichtung (11) Dunst (12) aus einer Speisenzubereitung durch den Einströmbereich eingesaugt sowie durch das Filter (10) und den Auslassbereich gefördert werden kann, wobei das Dunstabzugsmodul dazu eingerichtet ist, in einem Aufnahmebereich einer Küchenmaschine (1) aufgenommen zu werden.
